Europäisches Patentamt

European Patent Office

Office européen des brevets

(19)

(11) Veröffentlichungsnummer: **0 114 594**
**B1**

(12) # EUROPÄISCHE PATENTSCHRIFT

(45) Veröffentlichungstag der Patentschrift:
12.04.89

(51) Int. Cl.⁴: **B 60 C 11/06**

(21) Anmeldenummer: 83890238.5

(22) Anmeldetag: 29.12.83

(54) **Lauffläche für einen Fahrzeugluftreifen.**

(30) Priorität: 19.01.83 AT 160/83

(43) Veröffentlichungstag der Anmeldung:
01.08.84 Patentblatt 84/31

(45) Bekanntmachung des Hinweises auf die Patenterteilung:
12.04.89 Patentblatt 89/15

(84) Benannte Vertragsstaaten:
AT CH DE FR GB IT LI LU

(56) Entgegenhaltungen:
CH-A- 421 735
GB-A- 2 014 520
US-A- 1 956 011
US-A- 2 006 197

(73) Patentinhaber: Semperit Reifen Aktiengesellschaft,
Wienersdorferstrasse 20-24, A-2514 Traiskirchen (AT)

(72) Erfinder: Jaeger, Gert, Lutterstrasse 44/1,
A-2514 Traiskirchen (AT)
Erfinder: Kowalski, Johann, Ladislaus-Kiss-Gasse 4,
A-2542 Kottingbrunn (AT)
Erfinder: Liederer, Werner, Dr., Kapellengasse 5/3/29,
A-2514 Traiskirchen (AT)

## Beschreibung

Die Erfindung betrifft eine Lauffläche für einen Fahrzeugluftreifen gemäß dem Oberbegriff des Anspruches 1.

Neben den vielseitigsten, das Fahrverhalten betreffenden Anforderungen, die an ein Laufflächenprofil gestellt werden, ist eine wichtige weitere Forderung die Senkung des beim Abrollen des Reifens auftretenden Geräuschpegels.

Es gibt eine große Anzahl von Patenten, die eine Optimierung des Geräuschverhaltens durch spezielle Laufflächengestaltungen zum Inhalt haben. In der Praxis strebt man heute Lösungen an, bei denen die Dessinzyklenlänge über den Reifenumfang variiert, so daß der Geräuschpegel bei bestimmten, dominierenden Frequenzen vermindert wird. Eine derartige und gemäß dem Oberbegriff des Anspruches 1 ausgebildete Lauffläche ist beispielsweise aus der US-A 1 956 011 bekannt. Hiebei können die Dessinzyklen Profilblöcken entsprechen, die in Umfangsrichtung in aufeinanderfolgenden Gruppen angeordnet sind, wobei innerhalb einer Gruppe Profilblöcke unterschiedlicher Längen vorgesehen werden. In der GB-A 2 014 520 wird vorgeschlagen, die Dessinzyklen derart über den Reifenumfang anzuordnen, daß sich sogenannte harmonische Segmente ergeben, die Gliedern einer harmonischen Reihe zuordenbar sind. Die Längen der Dessinzyklen sind in jedem harmonischen Segment unterschiedlich, wobei sich die Länge der Dessinzyklen innerhalb der harmonischen Segmente nach einem sinusförmigen Muster ändert.

Bekannt ist weiters aus der CH-A 421 733 ein Allwetter-Kraftfahrzeugreifen mit Spikes in der Lauffläche, die aus gleichartigen Dessinzyklen aufgebaute Dessinringe aufweist, wobei die Dessinzyklenanzahl pro Dessinring von dem einen Laufflächenrand zum anderen hin kontinuierlich zunimmt. Eine derartige Lauffläche kann das Geräuschproblem nicht lösen, da alle Dessinringe über den Umfang gleiche Dessinzyklenlängen aufweisen und somit jeder Dessinring einen ausgeprägten Frequenzpeak erzeugt.

Gerade diese Frequenzpeaks aber empfindet das menschliche Ohr als besonders unangenehm. Darüber hinaus bedingt eine derartige Asymmetrie der Lauffläche eine entsprechende Ungleichheit in den Laufflächeneigenschaften, wobei insbesondere ein ungleichmäßiges Abriebsverhalten zu erwarten ist.

Die vorliegende Erfindung hat sich die Aufgabe gestellt, eine Lauffläche der eingangs genannten Art so zu gestalten, daß das von ihr erzeugte Abrollgeräusch gegenüber den bekannten Lösungen weiter herabgesetzt bzw. optimiert ist und die gleichzeitig bezüglich ihrer technischen Eigenschaften, wie Haftung, Wasserabführungsvermögen und Handling voll entspricht.

Gelöst wird die gestellte Aufgabe erfindungsgemäß dadurch, daß sich zumindest die Anzahl der Dessinzyklen des in der einen Laufflächenhälfte dem Reifenäquator benachbarten Dessinringes von der Anzahl der Dessinzyklen des in der anderen Laufflächenhälfte dem Reifenäquator benachbarten Dessinringes um 5 bis 50% unterscheidet.

Durch die erfindungsgemäße Wahl einer verschiedenen Anzahl von Dessinzyklen in zumindest zwei Dessinringen ergibt sich nun eine bedeutende Optimierungsmöglichkeit des von der Lauffläche gelieferten Frequenzspektrums in der Weise, daß eine weitere Vergleichmäßigung dadurch erreicht wird, daß nunmehr das Frequenztal zwischen dem niedrigsten Grundton und seiner ersten Harmonischen mit dem Grundton, bzw. den Grundtönen des bzw. der anderen Dessinringe(s), die aufgrund ihrer unterschiedlichen Dessinzyklenanzahl eine andere Grundfrequenz aufweisen, möglichst gleichmäßig aufgefüllt wird. Das bei der Frequenzanalyse erstellte Frequenzspektrum (Fourier-Analyse) eines so aufgebauten Laufflächenprofiles zeigt einen relativ gleichmäßigen Verlauf, wobei das Hervortreten einzelner Peaks aber nicht ganz vermieden werden kann.

Es muß hervorgehoben werden, daß auch kleinere Veränderungen des Frequenzspektrums sich subjektiv für das menschliche Ohr sowohl positiv, als auch negativ sehr stark auswirken können.

Es ist erforderlich, daß sich die Dessinzyklenanzahlen der Dessinringe um etwa 5 bis 50% voneinander unterscheiden. Unter 5% ist der Effekt auf das Geräuschverhalten sehr gering, über 50% ist die Asymmetrie der Lauffläche samt den damit einhergehenden technischen Problemen schon zu groß.

Durch die gleiche Breite der Dessinringe beidseitig des Reifenäquators wird im Zusammenhang mit der unterschiedlichen Dessinzyklenanzahl erreicht, daß die Vorteile der Asymmetrie für das Geräuschverhalten beim Abrollen mit einer dennoch an sich gleichmäßigen Gestaltung verbunden sind. Es ergibt sich dadurch, daß die sonstigen Fahreigenschaften des Reifens nur wenig verändert werden, während nur und gerade das Laufflächengeräusch minimiert werden kann. In diesem Sinne ist die Aufgabe der Erfindung darin zu sehen, dem Gestalter einer Reifenlauffläche eine Lehre zur Hand zu geben, die es ihm ermöglicht, unter der großen Anzahl von Reifeneigenschaften nur die eine günstig zu beeinflussen. Dies eben dadurch, daß bei im wesentlichen gleicher Breite der Dessinringe eine unterschiedliche Dessinzyklenanzahl innerhalb dieser Dessinringe gewählt wird.

Ein besonders vorteilhafter Effekt kann erreicht werden, wenn die einzelnen Dessinzyklen innerhalb eines Dessinringes um den Umfang in einer derartigen Abfolge – bezüglich ihrer Erstreckung in Umfangsrichtung – angeordnet werden, daß innerhalb der Dessinringe mehrere, verschieden große Segmente mit unterschiedlicher Dessinzyklenabfolge vorliegen. Bei zweckmäßiger Wahl dieser Segmente ergibt sich in an sich bekannter Weise, daß die Amplitude der Grundfrequenz verkleinert wird und sich die Schallenergie entsprechend auf einen Frequenzbereich aufteilt, so daß im Frequenzspektrum z.B. anstatt eines hohen Peaks ein flacherer, breiterer Berg auftritt.

Für PKW-Reifen ist es besonders zweckmäßig, wenn sich die Dessinzyklenanzahlen der Dessinringe um etwa 10 bis etwa 30% voneinander unterscheiden.

Sind die mindestens zwei sich in Umfangsrichtung erstreckenden Dessinringe symmetrisch zum Reifenäquator angeordnet, so ergibt sich ein weiterer Symmetrieeffekt, der die Gleichmäßigkeit der Laufflächeneigenschaften trotz der unterschiedlichen Dessinzyklenanzahl in den betreffenden Dessinringen erhöht.

Es muß in diesem Zusammenhang auch berücksichtigt werden, daß bei üblichen Dessingestaltungen z.B. über die Reifenbreite vier oder fünf Dessinringe verteilt sind, wobei die im Schulterbereich angeordneten Dessinringe zwangsläufig aus Dessinzyklen aufgebaut sind, die sich von den Dessinzyklen der inneren Dessinringe etwas unterscheiden. Die zum Reifenäquator symmetrische Anordnung der Dessinringe ist somit für viele Fälle auch aus den erwähnten Gestaltungsgründen vorteilhaft.

Eine weitere Ausgestaltung der Erfindung sieht vor, daß zumindest auf einer der Laufflächenhälften mehr als ein Dessinring vorgesehen ist, dessen Dessinzyklenanzahl sich zumindest von der Dessinzyklenanzahl eines in der anderen Laufflächenhälfte angeordneten Dessinringes unterscheidet. Dadurch ist eine weitere Beeinflussungsmöglichkeit des Geräuschpegels gegeben, wodurch sich eine noch bessere Anpassung an gewisse Konstruktionseigenschaften von Fahrzeugen erreichen läßt.

Eine für bestimmte Anordnungsfälle zweckmäßige Laufflächengestaltung liegt dann vor, wenn der über dem Reifenäquator in der Laufflächenmitte angeordnete Dessinring eine sich zumindest von einem der auf verschiedenen Seiten des Reifenäquators liegenden Dessinringe unterscheidende Dessinzyklenanzahl aufweist. Diese Laufflächengestaltung kann dann gewählt werden, wenn auf eine entlang des Reifenäquators verlaufende Rille verzichtet werden kann. Dies wird insbesondere bei breiteren Reifen mit z.B. fünf Dessinringen der Fall sein. Die Gestaltung der Dessinzyklenabfolge und Anzahl in dem mittigen Dessinring bietet dann eine weitere Möglichkeit zur positiven Beeinflussung des Geräuschpegels.

Eine weitere vorteilhafte Ausgestaltung der Erfindung sieht vor, vier Dessinringe – gebildet aus einem Paar in jeder Laufflächenhälfte – zu verwenden, deren Dessinzyklenanzahl jeweils unterschiedlich ist, wobei die Gesamtanzahl der Dessinzyklen in der einen Laufflächenhälfte gleich ist der Gesamtanzahl der Dessinzyklen in der anderen Laufflächenhälfte. Die Verwendung von derart gestalteten vier Dessinringen hat sich als besonders vorteilhaft herausgestellt, da dabei ein guter Kompromiß zwischen der Effektivität der Geräuschverminderung und der an sich angestrebten Symmetrie der Laufflächengestaltung erreicht wird.

Eine weitere Ausgestaltung der Erfindung sieht vor, daß in jeder Laufflächenhälfte je zwei, unterschiedliche Dessinzyklenanzahl aufweisende Dessinringe angeordnet sind, wobei der erste Dessinring die gleiche Dessinzyklenanzahl besitzt wie der dritte Dessinring, bzw. der zweite Dessinring die gleiche Dessinzyklenanzahl besitzt wie der vierte Dessinring. Eine derartige Lauffläche hat eine etwas ausgeprägtere Asymmetrie, wodurch es möglich ist, unterschiedliche geräuschbestimmende Parameter im Bereich der Laufflächenmitte und im Bereich der Reifenschultern zu berücksichtigen. Bei Radialreifen ist konstruktionsbedingt der Aufstandsdruck des Reifens im Bereich der Reifenschultern bei einem ordnungsgemäß aufgeblasenen Reifen größer als im Bereich der Laufflächenmitte. Dadurch ergeben sich auch für die Geräuschentwicklung etwas unterschiedliche Voraussetzungen, wobei die praktische Bedeutung dieser Effekte sehr von den übrigen Konstruktionsdetails des Reifens abhängt.

Eine weitere Ausgestaltung der Erfindung sieht vor, daß vier Dessinringe – gebildet aus einem Paar in jeder Laufflächenhälfte – vorgesehen sind, wobei die auf einer Laufflächenhälfte liegenden Dessinringe jeweils die gleiche Dessinzyklenanzahl aufweisen. Durch diese Ausführung wird bewußt eine erhöhte Asymmetrie erzeugt, wie sie für spezielle Einsatzbereiche manchmal gewünscht wird.

Die Erfindung ist auch auf solche Reifen anwendbar, die Dessinringe aufweisen, die aus unterschiedlichen Dessinzyklen aufgebaut sind. In diesem Fall kann es zweckmäßig sein, wenn beidseits des Reifenäquators, in gegebenenfalls unterschiedlicher Anordnung zu diesem, je zwei aus verschiedenen Dessinzyklen aufgebauten Dessinringe angeordnet sind, wobei je zwei auf verschiedenen Seiten des Reifenäquators liegende Dessinringe geometrisch gleichartige Dessinzyklen, jedoch unterschiedliche Dessinzyklenanzahlen aufweisen. Diese Variante erhöht die Freiheitsgrade des Laufflächengestalters erheblich und versetzt ihn so in die Lage, bestimmte andere Fahreigenschaften des Reifens, die mit der Laufflächengestaltung zusammenhängen (wie z.B. Rutschverhalten, Naßgriff, Eisgriff und dergleichen) durch Anpassung der Dessinzyklen selbst günstig zu beeinflussen.

Bei allen beschriebenen Ausgestaltungen können die Dessinzyklen sich wiederholende Abschnitte von z.B. einer Zick-Zack-Rippe sein, oder aus durch Nuten oder Einschnitte in Axialrichtung getrennten Profilblöcken bestehen.

Im folgenden wird die Erfindung an Hand der Zeichnung beispielhaft näher erläutert.

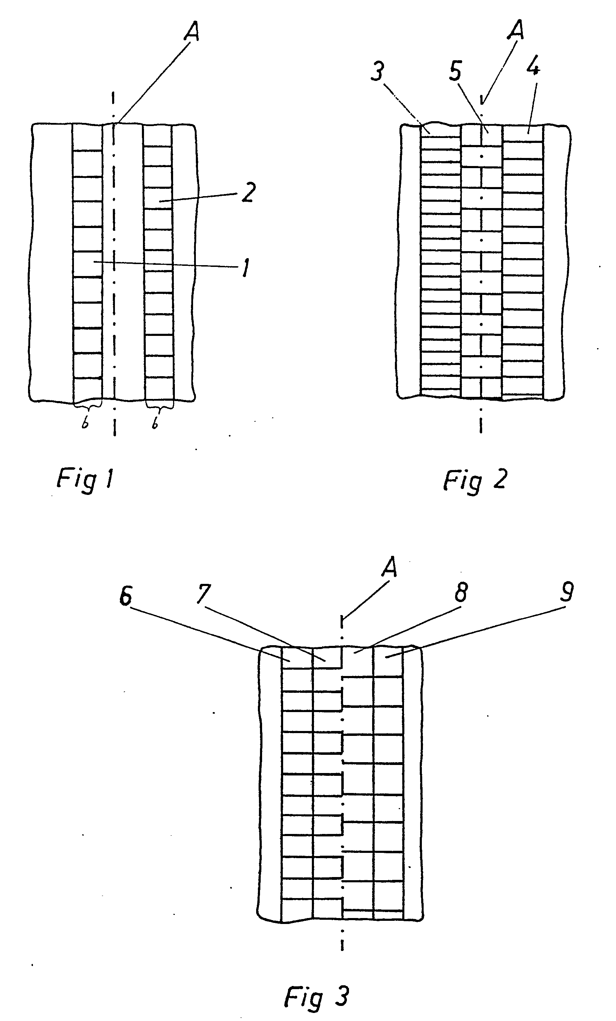

Es zeigen die Figuren 1 bis 6 in schematischer Form verschiedene Dessinringanordnungen. Die Fig. 1 zeigt zwei Dessinringe 1, 2, die gleiche Breite b aufweisen. Die Dessinringe 1, 2 liegen gemäß Fig. 1 in unterschiedlichem Abstand vom Reifenäquator A. Es ist jedoch im Rahmen der Erfindung auch möglich, daß bei einem Reifen mit zwei Dessinringen 1, 2 diese im gleichen Abstand zum Reifenäquator A angeordnet sind.

Fig. 2 zeigt drei Dessinringe 3, 4, 5, wobei die Dessinringe 3, 4 aus im Prinzip gleichen Dessinzyklen aufgebaut sind, aber – ebenso wie die in Fig. 1 dargestellten Dessinringe 1, 2 – eine unterschiedliche Dessinzyklenanzahl aufweisen. In der Reifenmitte, über dem Äquator A ist ein Dessinring 5 angeordnet, der aus den gleichen Dessinzyklen wie die Dessinringe 3, 4 aufgebaut sein kann. Es ist jedoch auch möglich, daß der Dessinring 5 aus anderen Dessinzyklen aufgebaut ist. Auch die Dessinzyklenanzahl des Dessinrings 5 kann im Rahmen der technischen Möglichkeiten gewählt werden.

Fig. 3 zeigt vier Dessinringe 6, 7, 8, 9, wobei die Dessinringe, die auf derselben Seite des Reifenäquators A liegen, jeweils aus gleichen Dessinzyklen mit gleicher Dessinzyklenanzahl bestehen. Es ergibt sich dadurch eine relative Asymmetrie.

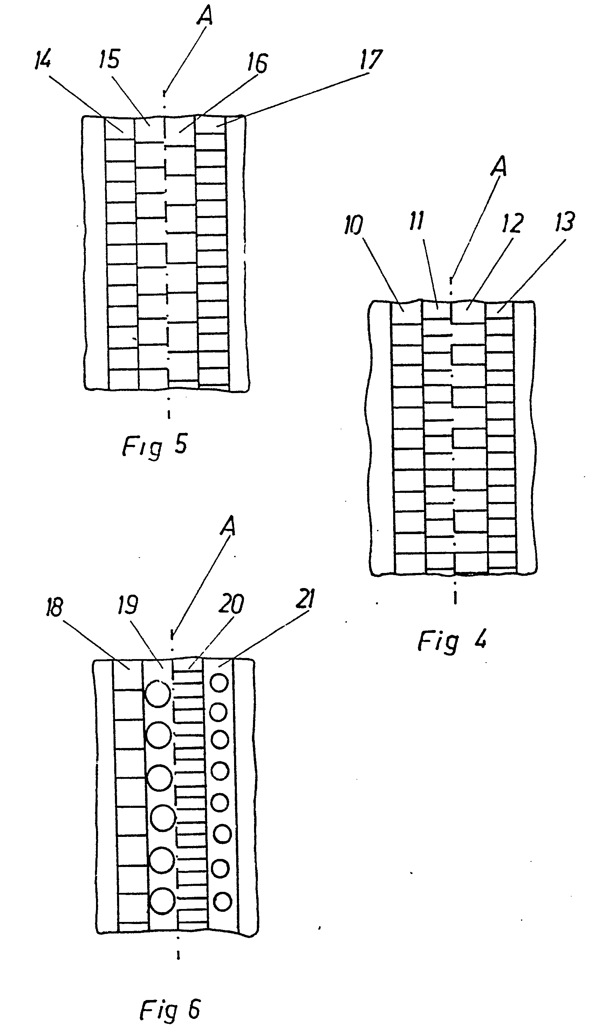

In Fig. 4 sind wiederum vier Dessinringe 10, 11, 12, 13 dargestellt, wobei von links nach rechts der erste Dessinring 10 und der dritte Dessinring 12 aus gleichen Dessinzyklen gleicher Dessinzyklenanzahl aufgebaut sind, welche Gleichartigkeit, allerdings unterschieden von den Dessinringen 10 und 12, auch für die Dessinringe 11 und 13 zutrifft. Es ergibt sich bei einer derartigen Laufflächengestaltung, daß auf beiden Seiten des Reifenäquators A in Summe die gleiche Dessinzyklenanzahl vorliegt.

In Summe die gleiche Dessinzyklenanzahl auf beiden Seiten des Reifenäquators A liegt auch bei der Ausgestaltung gemäß Fig. 5 vor, wobei dort allerdings alle Dessinringe 14, 15, 16, 17 zwar aus gleichen Dessinzyklen, aber mit jeweils unterschiedlicher Dessinzyklenanzahl, aufgebaut sind. Dabei ist die Dessinzyklenanzahl in den Dessinringen 14, 15, 16, 17, die auf verschiedenen Seiten des Reifenäquators A liegen, allerdings so gewählt, daß die Gesamtzyklenanzahl beider Laufflächenhälften gleich ist.

In Fig. 6 schließlich sind vier Dessinringe 18, 19, 20, 21 dargestellt, wobei auf verschiedenen Seiten des Reifenäquators A Dessinringe mit verschiedenen Dessinzyklen vorliegen, wobei diesen Dessinringen allerdings aus den jeweils gleichen Dessinzyklen aufgebaute Dessinringe auf der anderen Seite des Reifenäquators A entsprechen. Gemäß der Erfindung ist die Dessinzyklenanzahl der Dessinringe 18, 20 und 19, 21, die aus im Prinzip gleichartigen Dessinzyklen aufgebaut sind, unterschiedlich.

Erklärend soll noch darauf hingewiesen werden, daß im Sinne der Erfindung unter dem Begriff Dessinzyklus jede sich entlang des Reifenumfanges im wesentlichen wiederholende Gestaltungseinheit verstanden wird, sei diese jetzt ein einzelner Block samt den anteilig zu ihm gehörigen Begrenzungsnuten, oder sei dies ein Teil einer Umfangsrippe.

Beispielsweise soll auch noch angemerkt werden, daß bei gängigen PKW-Reifendimensionen die Dessinzyklenanzahl über den Reifenumfang zwischen etwa 50 und etwa 70 liegt, bei LKW-Reifen zwischen etwa 40 und etwa 80 liegt.

**Patentansprüche**

1. Lauffläche für einen Fahrzeugluftreifen mit mindestens zwei durch Umfangsnuten getrennten, auf verschiedenen, durch den Reifenäquator (A) geteilten Laufflächenhälften liegenden, sich in Umfangsrichtung erstreckenden Dessinringen (1 bis 4, 6 bis 21), insbesondere mit einem über dem Reifenäquator (A) ebenfalls in Umfangsrichtung verlaufenden Dessinring (5), wobei jeder Dessinring (1 bis 21) aus einer Abfolge von im Prinzip geometrisch gleichartigen, in der Dimensionierung jedoch unterschiedlichen Dessinzyklen aufgebaut ist, und wobei zumindest die beidseitig des Reifenäquators (A) verlaufenden Dessinringe (1 bis 4, 7, 8, 11, 12, 15, 16, 19, 20) gleiche Breite aufweisen, dadurch gekennzeichnet, daß sich zumindest die Anzahl der Dessinzyklen des in der einen Laufflächenhälfte dem Reifenäquator (A) benachbarten Dessinringes (1, 3, 7, 11, 15, 19) von der Anzahl der Dessinzyklen des in der anderen Laufflächenhälfte dem Reifenäquator (A) benachbarten Dessinringes (2, 4, 8, 12, 16, 20) um 5 bis 50% unterscheidet.

2. Lauffläche nach Anspruch 1, dadurch gekennzeichnet, daß sich die Anzahl der Dessinzyklen um 10 bis 30% voneinander unterscheidet.

3. Lauffläche nach Anspruch 1 oder 2, dadurch gekennzeichnet, daß mindestens zwei sich in Umfangsrichtung erstreckende Dessinringe (3, 4, 6 bis 21) vorgesehen sind, die symmetrisch zum Reifenäquator (A) angeordnet sind.

4. Lauffläche nach einem der Ansprüche 1 bis 3, dadurch gekennzeichnet, daß zumindest auf einer der Laufflächenhälften mehr als ein Dessinring (14, 15, 18, 19) vorgesehen ist, dessen Dessinzyklenanzahl sich zumindest von der Dessinzyklenanzahl eines in der anderen Laufflächenhälfte angeordneten Dessinringes (16, 17, 20, 21) unterscheidet.

5. Lauffläche nach einem der Ansprüche 1 bis 4, dadurch gekennzeichnet, daß ein über dem Reifenäquator (A) in der Laufflächenmitte angeordneter Dessinring (5) eine sich zumindest von einem der auf verschiedenen Seiten des Reifenäquators (A) liegenden Dessinringe (3, 4) unterscheidende Dessinzyklenanzahl aufweist.

6. Lauffläche nach Anspruch 4, dadurch gekennzeichnet, daß vier Dessinringe (14, 15, 16, 17) – gebildet aus einem Paar in jeder Laufflächenhälfte – vorgesehen sind, deren Dessinzyklenanzahl jeweils unterschiedlich ist, wobei die Gesamtanzahl der Dessinzyklen in der einen Laufflächenhälfte gleich ist der Gesamtanzahl der Dessinzyklen in der anderen Laufflächenhälfte.

7. Lauffläche nach einem der Ansprüche 1 bis 3, dadurch gekennzeichnet, daß in jeder Laufflächenhälfte je zwei, unterschiedliche Dessinzyklenanzahl aufweisende Dessinringe angeordnet sind, wobei der erste Dessinring (10) die gleiche Dessinzyklenanzahl besitzt wie der dritte Dessinring (12), bzw. der zweite Dessinring (11) die gleiche Dessinzyklenanzahl besitzt wie der vierte Dessinring (13).

8. Lauffläche nach einem der Ansprüche 1 bis 3, dadurch gekennzeichnet, daß vier Dessinringe (6, 7, 8, 9), gebildet aus einem Paar in jeder Laufflächenhälfte vorgesehen sind, wobei die auf einer Laufflächenhälfte liegenden Dessinringe (6, 7, 8, 9) jeweils die gleiche Dessinzyklenanzahl aufweisen.

9. Lauffläche nach einem der Ansprüche 1 bis 4, dadurch gekennzeichnet, daß beidseits des Reifenäquators (A), in gegebenenfalls unterschiedlicher Anordnung zu diesem, je zwei aus verschiedenen Dessinzyklen aufgebaute Dessinringe (18, 19, 20, 21) angeordnet sind, wobei je zwei auf verschiedenen Seiten des Reifenäquators (A) liegende Dessinringe (18, 20; 19, 21) geometrisch gleichartige Dessinzyklen, jedoch unterschiedliche Dessinzyklenanzahlen aufweisen.

10. Lauffläche nach einem der vorhergehenden Ansprüche, dadurch gekennzeichnet, daß die Dessinzyklen sich wiederholende Abschnitte, z.B. einer Zickzackrippe sind.

11. Lauffläche nach einem der vorhergehenden Ansprüche, dadurch gekennzeichnet, daß die Dessinzyklen durch Nuten oder Einschnitte in Axialrichtung getrennte Profilblöcke sind.

**Claims**

1. A tread for a pneumatic tyre comprising at least two pattern rings (1 to 4, 6 to 21) which are separated by peripheral grooves, are located on different halves of the tread divided by the tyre equator (A), and extend in the peripheral direction, in particular comprising a pattern ring (5) which extends over the tyre equator (A) likewise in the peripheral direction, where each pattern ring (1 to 21) is constructed from a sequence of pattern cycles which are fundamentally identical geometrically but which differ in dimensioning, and where at least the pattern rings (1 to 4, 7, 8, 11, 12, 15, 16, 19, 20) which extend on both sides of the tyre equator (A) have the same breadth, characterised in that at least the number of pattern cycles of the pattern ring (1, 3, 7, 11, 15, 19), which is adjacent to the tyre equator (A) in one half of the tread differs by 5 to 50% from the number of pattern cycles of the pattern ring (2, 4, 8, 12, 16, 20) which is adjacent to the tyre equator (A) in the other half of the tread.

2. A tread as claimed in Claim 1, characterised in that the numbers of pattern cycles differ from one another by 10 to 30%.

3. A tread as claimed in Claim 1 or 2, characterised in that at least two pattern rings (3, 4, 6 to 21) are provided which extend in the peripheral direction and which are arranged symmetrically in relation to the tyre equator (A).

4. A tread as claimed in one of Claims 1 to 3, characterised in that at least on one of the tread halves, there is provided more than one pattern ring (14, 15, 18, 19) in which the number of pattern cycles differs at least from the number of pattern cycles of a pattern ring (16, 17, 20, 21) arranged in the other tread half.

5. A tread as claimed in one of Claims 1 to 4, characterised in that a pattern ring (5) arranged over the tyre equator (A) in the centre of the tread has a number of pattern cycles which differs at least from one of the pattern rings (3, 4) located on different sides of the tyre equator (A).

6. A tread as claimed in Claim 4, characterised in that four pattern rings (14, 15, 16, 17) – formed by one pair in each tread half – are provided, in each of which the number of pattern cycles differs and where the total number of pattern cycles in one half of the tread is identical to the total number of pattern cycles in the other half of the tread.

7. A tread as claimed in one of Claims 1 to 3, characterised in that in each half of the tread there are arranged two pattern rings which comprise a different number of pattern cycles and where the first pattern ring (10) comprises the same number of pattern cycles as the third pattern ring (12), and the second pattern ring (11) comprises the same number of pattern cycles as the fourth pattern ring (13).

8. A tread as claimed in one of Claims 1 to 3, characterised in that four pattern rings (6, 7, 8, 9), formed by one pair in each tread half, are provided, where the pattern rings (6, 7, 8, 9) located on one half of the tread in each case comprise the same number of pattern cycles.

9. A tread as claimed in one of Claims 1 to 4, characterised in that two pattern rings (18, 19, 20, 21), each constructed from different pattern cycles, are arranged on both sides of the tyre equator (A), possibly in a different arrangement in relation to the latter, where two pattern rings (18, 20; 19, 21) arranged on different sides of the tyre equator (A) possess pattern cycles which are identical geometrically but which differ in respect of number.

10. A tread as claimed in one of the preceding Claims, characterised in that the pattern cycles are recurring segments, e.g. of a zig-zag rib.

11. A tread as claimed in one of the preceding Claims, characterised in that the pattern cycles are profile blocks separated by grooves or indentations in the axial direction.

**Revendications**

1. Bande de roulement pour un bandage pneumatique de véhicules, présentant au moins deux anneaux (1 à 4, 6 à 21) à dessins qui s'étendent dans le sens périphérique, sont séparés par des gorges circonférentielles et se trouvent sur des moitiés différentes de la bande de roulement, scindées par l'équateur (A) du pneumatique, notamment un anneau (5) à dessins s'étendant également dans le sens périphérique, au-dessus de l'équateur (A) du pneumatique, chaque anneau (1 à 21) à dessins se composant d'une succession de répétitions cycliques de dessins dans leur principe géométriquement similaires, mais toutefois différentes quant à leur dimensionnement, et au moins les anneaux (1 à 4, 7, 8, 11, 12, 15, 16, 19, 20) à dessins qui s'étendent de part et d'autre de l'équateur (A) du pneumatique présentant la même largeur, caractérisée par le fait qu'au moins le nombre des répétitions cycliques des dessins de l'anneau (1, 3, 7, 11, 15, 19) à dessins voisin de l'équateur (A) du pneumatique, dans l'une des moitiés de la bande de roulement, est différent, de 5 à 50%, du nombre des répétitions cycliques des dessins de l'anneau (2, 4, 8, 12, 16, 20) à dessins voisin de l'équateur (A) du pneumatique dans l'autre moitié de la bande de roulement.

2. Bande de roulement selon la revendication 1, caractérisée par le fait que le nombre des répétitions cycliques des dessins diffère mutuellement de 10 à 30%.

3. Bande de roulement selon la revendication 1 ou 2, caractérisée par la présence d'au moins deux anneaux (3, 4, 6 à 21) à dessins s'étendant dans le sens périphérique, qui sont disposés symétriquement par rapport à l'équateur (A) du pneumatique.

4. Bande de roulement selon l'une des revendications 1 à 3, caractérisée par la présence, sur au moins l'une des moitiés de cette bande de roulement, de plus d'un anneau (14, 15, 18, 19) à dessins dont le nombre des répétitions cycliques des dessins diffère au moins du nombre des répétitions cycliques des dessins d'un anneau (16, 17, 20, 21) à dessins disposé dans l'autre moitié de la bande de roulement.

5. Bande de roulement selon l'une des revendications 1 à 4, caractérisée par le fait qu'un anneau (5) à dessins disposé au centre de la bande de roulement, au-dessus de l'équateur (A) du pneumatique, présente un nombre de répétitions cycliques des dessins différant au moins de l'un des anneaux (3, 4) à dessins situés sur des côtés différents de l'équateur (A) du pneumatique.

6. Bande de roulement selon la revendication 4, caractérisée par la présence de quatre anneaux (14, 15, 16, 17) à dessins – formés d'une paire dans chaque moitié de la bande de roulement –, dont le nombre des répétitions cycliques des dessins diffère à chaque fois, le nombre total des répétitions cycliques des dessins étant identique, dans l'une des moitiés de la bande de roulement, au nombre total des répétitions cycliques des dessins dans l'autre moitié de cette bande de roulement.

7. Bande de roulement selon l'une des revendications 1 à 3, caractérisée par le fait que deux anneaux respectifs à dessins, présentant un nombre différent de répétitions cycliques des dessins, sont disposés dans chaque moitié de la bande de roulement, le premier anneau (10) à dessins possédant le même nombre de répétitions cycliques des dessins que le troisième anneau (12) à dessins ou, respectivement, le deuxième anneau (11) à dessins possédant le même nombre de répétitions cycliques des dessins que le quatrième anneau (13) à dessins.

8. Bande de roulement selon l'une des revendications 1 à 3, caractérisée par la présence de quatre anneaux (6, 7, 8, 9) à dessins, formés d'une paire dans chaque moitié de la bande de roulement, les anneaux (6, 7, 8, 9) à dessins situés sur une moitié de la bande de roulement présentant, à chaque fois, le même nombre de répétitions cycliques des dessins.

9. Bande de roulement selon l'une des revendications 1 à 4, caractérisée par le fait que deux anneaux respectifs (18, 19, 20, 21) à dessins comportant différentes répétitions cycliques des dessins sont disposés de part et d'autre de l'équateur (A) du pneumatique, avec disposition éventuellement différente par rapport à celui-ci, deux anneaux (18, 20; 19, 21) à dessins considérés, situés sur des côtés différents de l'équateur (A) du pneumatique, présentant alors des répétitions cycliques de dessins géométriquement de même type, mais des nombres différents de répétitions cycliques des dessins.

10. Bande de roulement selon l'une des revendications précédentes, caractérisée par le fait que les répétitions cycliques des dessins sont, par exemple, des tronçons répétitifs d'une nervure en zigzag.

11. Bande de roulement selon l'une des revendications précédentes, caractérisée par le fait que les répétitions cycliques des dessins sont des blocs profilés séparés, dans le sens axial, par des gorges ou des entailles.

Fig 1

Fig 2

Fig 3

A

14  15  A  16  17

Fig 5

A

10  11  A  12  13

Fig 4

A

18  19  A  20  21

Fig 6